# EUROPÄISCHE PATENTSCHRIFT

(11) **EP 3 000 639 B1**
(45) Veröffentlichungstag und Bekanntmachung des Hinweises auf die Patenterteilung: **26.02.2020**
(21) Anmeldenummer: 15002348.9
(22) Anmeldetag: 06.08.2015
(51) Int. Cl.: B60J 7/20

(54) **VORRICHTUNG ZUR AUFNAHME EINES VERDECKS EINES KRAFTFAHRZEUGS IN CABRIOLET-BAUFORM UND KRAFTFAHRZEUG**
DEVICE FOR HOLDING A VEHICLE CONVERTIBLE TOP IN CONVERTIBLE FORM AND MOTOR VEHICLE
DISPOSITIF DESTINÉ À RECEVOIR UNE CAPOTE D'UN VÉHICULE AUTOMOBILE CABRIOLET ET VÉHICULE AUTOMOBILE

(30) Priorität: 23.09.2014 DE 102014014090
(43) Veröffentlichungstag der Anmeldung: 30.03.2016
(73) Patentinhaber: AUDI AG, 85045 Ingolstadt (DE); FKT GmbH, 85104 Pförring (DE)
(72) Erfinder: Wachs, Mario, DE - 86633 Neuburg (DE); Günthner, Guido, DE - 85104 Lobsing (DE); Huber, Klaus, DE - 85290 Geisenfeld (DE)

(56) Entgegenhaltungen:
- EP-A2- 1 736 341
- DE-A1-102004 057 396
- DE-A1-102005 048 256
- DE-A1-102012 012 812

## Beschreibung

Die Erfindung betrifft eine Vorrichtung zur Aufnahme eines Verdecks eines Kraftfahrzeugs in Cabriolet-Bauform, gemäß dem Oberbegriff des Patentanspruchs 1.

Derartige Vorrichtungen sind aus dem Bereich der Kraftfahrzeugtechnik bekannt und dienen zur Aufnahme eines Verdecks eines Kraftfahrzeugs in Cabriolet-Bauform, kurz eines Cabriolet-Verdecks.

Entsprechende Vorrichtungen umfassen üblicherweise mehrere zwischen zwei Schwenkstellungen verschwenkbar an der Fahrzeugkarosserie zu lagernde oder gelagerte Schwenkteile. In jeweiligen ersten Schwenkstellungen der Schwenkteile ist ein einen Teil des kraftfahrzeugseitigen Gepäckraums einnehmender Aufnahmeraum zur Aufnahme eines Cabriolet-Verdecks ausgebildet. In jeweiligen zweiten Schwenkstellungen der Schwenkteile ist ein entsprechender Aufnahmeraum nicht ausgebildet.

Die Schwenkteile können dabei vermittels einer Antriebseinrichtung verschwenkt werden. Über die Antriebseinrichtung lassen sich die Schwenkteile sonach in Schwenkbewegungen versetzen respektive in entsprechende Schwenkstellungen verschwenken.

Bisherige Vorrichtungen sind in ihrem funktionellen und konstruktiven Aufbau zum Teil aufwändig gestaltet, so dass hier ein Weiterentwicklungsbedarf besteht.

EP 1 736 341 A2 offenbart ein Cabriolet-Fahrzeug mit einer Verdeckaufnahmeeinrichtung, die zwei zwischen einer ersten und zweiten Schwenkstellung verschwenkbare Schwenkteile aufweist. Zwischen den beiden Schwenkteilen ist ein Bodenteil angeordnet. Das Verdeck kann sonach mittels der Verdeckaufnahmeeinrichtung im geöffneten Zustand des Cabriolet-Fahrzeugs aufgenommen werden. Als eine Kupplungseinrichtung, die dazu geeignet ist, Kräfte oder Momente zwischen Bauteilen zu übertragen, ist beispielsweise die Verbindung zwischen einer bei der Verdeckaufnahmeeinrichtung vorgesehenen Zahnstange und einer dort ebenfalls vorgesehenen Bowdenzug anzuführen. Allgemein sind derartige Kupplungseinrichtungen, die der reinen Kraft- oder Momentübertragung und damit der Bauteilverbindung dienen, zwischen verschiedenen Elementen der Verdeckaufnahmeeinrichtung aus EP 1 736 341 A2 vorgesehen.

DE 10 2005 048 265 A1 offenbart eine Laderaumabdeckung für ein Kraftfahrzeug mit faltbarem Dach, bei der mittels einer Torsionsfeder ein erstes Schwenkteil bewegt werden kann, sodass dieses ein zweites Schwenkteil zwangsgekoppelt mitbewegt, um somit einen Raum zur Ablage des Verdecks zu schaffen.

Aus DE 10 2004 057 396 A1 ist eine Vorrichtung zum Abtrennen eines Kofferraums eines Kraftfahrzeugs von einem Verdeckablageraum bekannt. Vorgesehen sind Trennelemente mit mehreren Trennelementabschnitten, die in eine obere und eine untere Position bewegbar sind, sodass die Größe des Kofferraums und des Verdeckablageraums variiert werden kann.

DE 10 2012 012 812 A1 offenbart schließlich eine Abtrennvorrichtung für ein Cabriolet, die zwischen einer Gebrauchsstellung und einer Nichtgebrauchsstellung bewegt werden kann. Dabei wird die flexible Abtrennung von einem bewegbaren Abtrennelement über Vier- oder Mehrgelenkscharniere bewegt.

Der Erfindung liegt die Aufgabe zugrunde, eine, insbesondere hinsichtlich ihres funktionellen und konstruktiven Aufbaus, verbesserte Vorrichtung zur Aufnahme eines Verdecks eines Kraftfahrzeugs in Cabriolet-Bauform anzugeben.

Die Aufgabe wird durch eine Vorrichtung der eingangs genannten Art gelöst, welche sich durch wenigstens eine Kupplungseinrichtung, die die Kopplung des Antriebs mit dem ersten oder zweiten Schwenkteil bei Überschreiten einer bestimmten kupplungseinrichtungsspezifischen Last löst und bei Unterschreiten der bestimmten kupplungseinrichtungsspezifischen Last wieder herstellt, auszeichnet.

Die Vorrichtung dient im Allgemeinen der Aufnahme eines Cabriolet-Verdecks, d. h. eines Verdecks eines Kraftfahrzeugs in Cabriolet-Bauform.

Die Vorrichtung umfasst zwei Schwenkteile. Die Schwenkteile sind jeweils verschwenkbar an der Fahrzeugkarosserie zu lagern bzw. im ordnungsgemäß in einem Kraftfahrzeug verbauten Zustand der Vorrichtung verschwenkbar an der Fahrzeugkarosserie gelagert. Die verschwenkbare Lagerung der Schwenkteile ermöglicht Schwenkbewegungen um eine Schwenkachse, welche sich im ordnungsgemäß in einem Kraftfahrzeug verbauten Zustand der Vorrichtung typischerweise (im Wesentlichen) quer zu der Längsachse des Kraftfahrzeugs erstreckt. Die verschwenkbare Lagerung der Schwenkteile ermöglicht sonach insbesondere Schwenkbewegungen relativ zu der Fahrzeugkarosserie.

Das erste Schwenkteil ist im in einem Kraftfahrzeug verbauten Zustand der Vorrichtung typischerweise an einem einen hinteren Gepäckraum von einer Fahrgastzelle trennenden Fahrzeugkarosserieteil, insbesondere einer einen hinteren Gepäckraum von einer Fahrgastzelle trennenden Rückwand, gelagert und kann insofern bezogen auf die Längserstreckung des Kraftfahrzeugs auch als vorderes Schwenkteil bezeichnet bzw. erachtet werden. Das erste Schwenkteil kann eine bügelartige, d. h. insbesondere U-förmige, Gestalt aufweisen. Das zweite Schwenkteil ist, im in einem Kraftfahrzeug verbauten Zustand der Vorrichtung, typischerweise an einem zwischen dem den Gepäckraum von der Fahrgastzelle trennenden Fahrzeugkarosserieteil und dem Heck der Fahrzeugkarosserie angeordneten oder ausgebildeten weiteren Fahrzeugkarosserieteil gelagert und kann insofern bezogen auf die Längserstreckung des Kraftfahrzeugs auch als hinteres Schwenkteil bezeichnet bzw. erachtet werden. Das zweite Schwenkteil kann eine blendenartige, d. h. insbesondere flächige, Gestalt aufweisen.

Die Schwenkteile sind dabei typischerweise jeweils zwischen zwei Schwenkstellungen verschwenkbar. Jedes Schwenkteil lässt sich sonach in zwei ausgezeichnete Schwenkstellungen verschwenken. Im ordnungsgemäß in einem Kraftfahrzeug verbauten Zustand der Vorrichtung ist in einer jeweiligen ersten Schwenkstellung des ersten und zweiten Schwenkteils typischerweise ein einen Teil des oder eines hinteren Gepäck- oder Kofferraums einnehmender, insbesondere wannenförmiger Aufnahmeraum zur Aufnahme eines Verdecks des Kraftfahrzeugs ausbildbar oder ausgebildet. Entsprechend ist in einer jeweiligen zweiten Schwenkstellung des ersten und zweiten Schwenkteils typischerweise kein solcher Aufnahmeraum zur Aufnahme eines Verdecks des Kraftfahrzeugs ausbildbar oder ausgebildet. Der zur Lagerung von Gegenständen, insbesondere Gepäckstücken, verfügbare hintere Gepäckraum ist in der jeweiligen ersten Schwenkstellung der beiden Schwenkteile typischerweise kleiner als in der jeweiligen zweiten Schwenkstellung der Schwenkteile.

Das in die erste Schwenkstellung verschwenkte erste Schwenkteil weist typischerweise eine andere räumliche Ausrichtung bzw. Orientierung als das in die erste Schwenkstellung verschwenkte zweite Schwenkteil auf. Gleiches gilt für die jeweiligen zweiten Schwenkstellungen. Entsprechend sind die beiden Schwenkteile in ihren jeweiligen ersten bzw. zweiten Schwenkstellungen typischerweise unterschiedlich räumlich ausgerichtet bzw. orientiert, d. h. insbesondere nicht parallel ausgerichtet bzw. orientiert.

Bei den Schwenkteilen handelt es sich im Allgemeinen jeweils um Bauteile nach Art eines Schwenkarms oder -rahmens. Wie erwähnt, kann das erste Schwenkteil insbesondere eine bügelartige Gestalt und das zweite Schwenkteil insbesondere eine blendenartige Gestalt aufweisen. Die Schwenkteile können ein- oder mehrteilig ausgeführt sein. Die Schwenkteile können insbesondere aus Kunststoff, z. B. Polyamid oder Polycarbonat, oder Metall, z. B. Aluminium oder Stahl, gefertigt sein.

Das der Vorrichtung zugehörige Bodenteil ist an beiden Schwenkteilen befestigt bzw. befestigbar. Die beiden Schwenkteile und das Bodenteil können sonach als eine Schwenkanordnung bezeichnet bzw. erachtet werden. Das Bodenteil kann aus zumindest teilweise einem flexiblen bzw. textilartigen Bodenteilelement oder mehreren miteinander verbundenen, zumindest teilweise flexiblen bzw. textilartigen Bodenteilelementen gebildet sein. Grundsätzlich kann das Bodenteil respektive können entsprechende Bodenteilelemente zumindest teilweise auch aus einem nicht flexiblen, d.h. starren, Material gebildet sein.

Typischerweise ist das Bodenteil an dem ersten Schwenkteil vermittels einer an sich bekannten Rollo-Einrichtung befestigt. Über die Rollo-Einrichtung kann sichergestellt werden, dass das Bodenteil stets unter einer gewissen Zugspannung gehalten bzw. gestrafft werden kann. Derart können Abstands- bzw. Längendifferenzen zwischen dem ersten und dem zweiten Schwenkteil in den jeweiligen Schwenkstellungen ausgeglichen werden.

Das erste Schwenkteil kann als Aufnahme für eine entsprechende Rollo-Einrichtung dienen. In der Rollo-Einrichtung kann dabei ein Teil des Bodenteils aufgewickelt werden, um, wie erwähnt, Abstandsdifferenzen zwischen dem ersten und dem zweiten Schwenkteil in den jeweiligen unterschiedlichen Schwenkstellungen auszugleichen.

Die Vorrichtung umfasst ferner eine Antriebseinrichtung. Über die Antriebseinrichtung respektive wenigstens ein der Antriebseinrichtung zugehöriges Funktionselement ist eine unmittelbare mechanische Verbindung der beiden Schwenkteile miteinander sowie insbesondere eine unmittelbare Bewegungskopplung der beiden Schwenkteile realisiert. Bewegungen, vorliegend typischerweise Schwenkbewegungen, des ersten Schwenkteils bedingen aufgrund der Bewegungskopplung der Schwenkteile unmittelbar Bewegungen, vorliegend typischerweise Schwenkbewegungen, des zweiten Schwenkteils oder umgekehrt. Mithin bedingen über die Antriebseinrichtung induzierte Schwenkbewegungen in ein Schwenkteil, z. B. das erste Schwenkteil, insbesondere richtungsmäßig entgegen gesetzte, Schwenkbewegungen des jeweils anderen Schwenkteils, z. B. des zweiten Schwenkteils, oder umgekehrt. Konkret bedingen Schwenkbewegungen des ersten Schwenkteils im Uhrzeigersinn sonach typischerweise Schwenkbewegungen des zweiten Schwenkteils entgegen dem Uhrzeigersinn, oder umgekehrt.

Entsprechende Schwenkbewegungen können unmittelbar über einen der Antriebseinrichtung zugehörigen Antrieb als (weiteres) Funktionselement der Antriebseinrichtung, etwa in Form eines, z. B. elektrischen Antriebsmotors oder einer Antriebshydraulik, in das erste oder zweite Schwenkteil eingebracht werden. Es ist also möglich, dass der oder ein Antrieb unmittelbar mit dem ersten oder zweiten Schwenkteil gekoppelt ist derart, dass über diesen eine Schwenkbewegung in das unmittelbar mit dem Antrieb gekoppelte erste oder zweite Schwenkteil einbringbar ist, wobei eine in das unmittelbar mit dem Antrieb gekoppelte erste oder zweite Schwenkteil eingebrachte Schwenkbewegung eine, insbesondere richtungsmäßig entgegen gesetzte, Schwenkbewegung des nicht unmittelbar mit dem Antrieb gekoppelten ersten oder zweiten Schwenkteils, oder umgekehrt, bedingt.

Zwischen dem Antrieb und dem ersten oder zweiten Schwenkteil ist erfindungsgemäß eine Kupplungseinrichtung, z. B. in Form einer Lamellen-, Reib- oder Rutschkupplung, angeordnet sein, über welche sich die Kopplung zwischen dem Antrieb und dem ersten oder zweiten Schwenkteil bedarfs- bzw. zeitweise lösen lässt. Über die Kupplungseinrichtung lässt sich eine kraft- und/oder formschlüssige, gleichwohl lösbare Kopplung zwischen dem Antrieb und dem ersten oder zweiten Schwenkteil ausbilden bzw. herstellen.

Die Kupplungseinrichtung ist erfindungsgemäß derart eingerichtet, dass sie die Kopplung des Antriebs mit dem ersten oder zweiten Schwenkteil bei Überschreiten einer bestimmten kupplungseinrichtungsspezifischen Last löst und bei Unterschreiten der bestimmten bzw. kupplungseinrichtungsspezifischen Last wieder ausbildet bzw. herstellt. Dies kann beispielsweise vermittels eines oder mehrerer vorgespannter Federelemente, welche ein der Kupplungseinrichtung zugehöriges antriebsseitiges Kupplungselement gegen ein der Kupplungseinrichtung zugehöriges schwenkteilseitiges Kupplungselement verspannen, realisiert sein. Durch das "automatische" Lösen der Kopplung bei Überschreiten der bestimmten kupplungseinrichtungsspezifischen Last, können Beschädigungen der Vorrichtung, d. h. insbesondere der Schwenkteile und/oder der Antriebseinrichtung, infolge von äußeren Lastsituationen, z. B. bei unsachgemäßer Bedienung der Vorrichtung, verhindert werden.

Die über die Antriebseinrichtung gegebene Verbindung und Bewegungskopplung zwischen den beiden Schwenkteilen ist in allen Fällen weiterhin gewährleistet.

Möglich ist es auch, dass Schwenkbewegungen mittelbar über ein, bereits erwähntes, mit dem oder einem antriebseinrichtungsseitigen Antrieb und dem ersten und/oder zweiten Schwenkteil gekoppeltes Antriebsmittel in das erste und/oder zweite Schwenkteil eingebracht werden. Ein solches Antriebsmittel ist sonach als zwischen den Antrieb und die jeweiligen Schwenkteile geschaltetes Funktionselement der Antriebseinrichtung zu bezeichnen bzw. zu erachten. Es ist also möglich, dass der oder ein Antrieb unmittelbar mit dem Antriebsmittel gekoppelt ist derart, dass über einen Antrieb des Antriebsmittels, insbesondere richtungsmäßig entgegen gesetzte, Schwenkbewegungen in das erste und das zweite Schwenkteil einbringbar sind.

Ein entsprechender der Antriebseinrichtung zugehöriger Antrieb kann unmittelbar an oder in dem ersten oder zweiten Schwenkteil angeordnet oder ausgebildet sein. Derart lässt sich eine besonders bauraumgünstige bzw. - sparende Anordnung bzw. Ausbildung, allgemeine Integration, eines entsprechenden Antriebs in die Vorrichtung realisieren.

Insgesamt ist ein funktionell bzw. konstruktiv vereinfachtes und somit verbessertes Prinzip einer entsprechenden Vorrichtung zur Aufnahme eines Cabriolet-Verdecks gegeben. Insbesondere ist es möglich, die Schwenkteile vermittels der Antriebseinrichtung vollautomatisch zwischen jeweiligen Schwenkstellungen zu verschwenken, um einen entsprechenden Aufnahmeraum für ein Verdeck auszubilden bzw. nicht auszubilden.

Es wurde erwähnt, dass die Antriebseinrichtung als ein ihr zugehöriges Funktionselement wenigstens ein Antriebsmittel umfassen kann. Es wurde ebenso erwähnt, dass die beiden Schwenkteile über das Antriebsmittel miteinander verbunden und derart bewegungsgekoppelt sein können, dass über die Antriebseinrichtung induzierte Schwenkbewegungen des ersten Schwenkteils, insbesondere richtungsmäßig entgegen gesetzte, Schwenkbewegungen des zweiten Schwenkteils, oder umgekehrt, bedingen.

Ein entsprechendes Antriebsmittel wirkt also typischerweise einerseits mit einem Antrieb, z. B. in Form eines Antriebsmotors, und andererseits mit den beiden Schwenkteilen zusammen. Auf das Antriebsmittel lässt sich über den Antrieb eine Antriebsenergie, typischerweise ein Antriebsmoment, übertragen. Die auf das Antriebsmittel übertragene Antriebsenergie lässt sich weiter auf die Schwenkteile übertragen, so dass diese in entsprechende Schwenkbewegungen versetzt werden. Das Antriebsmittel eignet sich sonach im Allgemeinen dazu, Kräfte bzw. Momente zu übertragen. Entsprechend kann das Antriebsmittel beispielsweise als ein Antriebsriemen, eine Antriebskette oder ein Antriebsseil ausgebildet sein. Die jeweiligen Ausführungen des Antriebsmittels können aus Kunststoff, z. B. Polyamid, oder Metall, z. B. Stahl, gefertigt sein.

An den beiden Schwenkteilen sind zweckmäßig drehfest angeordnete oder ausgebildete Antriebselemente vorhanden. Das Antriebsmittel kann entsprechende drehfest an den jeweiligen Schwenkteilen angeordnete oder ausgebildete Antriebselemente abschnittsweise umschlingen. Die Umschlingung der schwenkteilseitigen Antriebselemente durch das Antriebsmittel ermöglicht es, eine entsprechende Antriebsenergie auf die Antriebselemente und so die Schwenkteile zu übertragen. Die Umschlingung der schwenkteilseitigen Antriebselemente durch das Antriebsmittel bedingt sonach die Ausbildung einer Wirkverbindung zwischen dem Antrieb und den Schwenkteilen.

Die jeweiligen schwenkteilseitigen Antriebselemente sind typischerweise als, insbesondere rollenartige, Umlenkelemente ausgebildet. Die Umschlingung der Antriebselemente bedingt sonach typischerweise eine Umlenkung der Längsausrichtung des Antriebsmittels.

Die jeweiligen Umlenkelemente können gleiche oder unterschiedliche Abmessungen, insbesondere Außenumfänge, aufweisen. Über unterschiedliche Abmessungen, d. h. insbesondere über unterschiedliche Außenumfänge, der jeweiligen schwenkteilseitigen Umlenkelemente, ist es möglich, gezielt Schwenkbewegungen des ersten und zweiten Schwenkteils mit unterschiedlichen Winkelgeschwindigkeiten im Sinne einer Über- oder Untersetzung zu realisieren.

Die Vorrichtung kann ferner eine Spanneinrichtung umfassen, welche zum Spannen des Antriebsmittels eingerichtet ist. Über die Spanneinrichtung, d. h. z. B. eine mit dem Antriebsmittel zusammenwirkende Feder, können sonach z. B. fertigungsbedingte und/oder betriebsbedingte, insbesondere temperaturbedingte, Längentoleranzen des Antriebsmittels ausgeglichen werden. Gleichermaßen kann das Antriebsmittel stets unter einer bestimmten Vorspannung gehalten werden. Derart ist insbesondere auch die Ausbildung einer von Fahrzeuginsassen gegebenenfalls als störend empfundenen Geräuschkulisse, z. B. durch Klappergeräusche, unterbunden.

Die Erfindung betrifft ferner ein Kraftfahrzeug in Cabriolet-Bauform, kurz ein Cabriolet, umfassend ein Verdeck und eine wie beschriebene Vorrichtung. Es gelten sämtliche Ausführungen im Zusammenhang mit der Vorrichtung analog für das Kraftfahrzeug.

Weitere Vorteile, Merkmale und Einzelheiten der Erfindung ergeben sich aus dem im Folgenden beschriebenen Ausführungsbeispiel sowie anhand der Zeichnungen. Dabei zeigen:

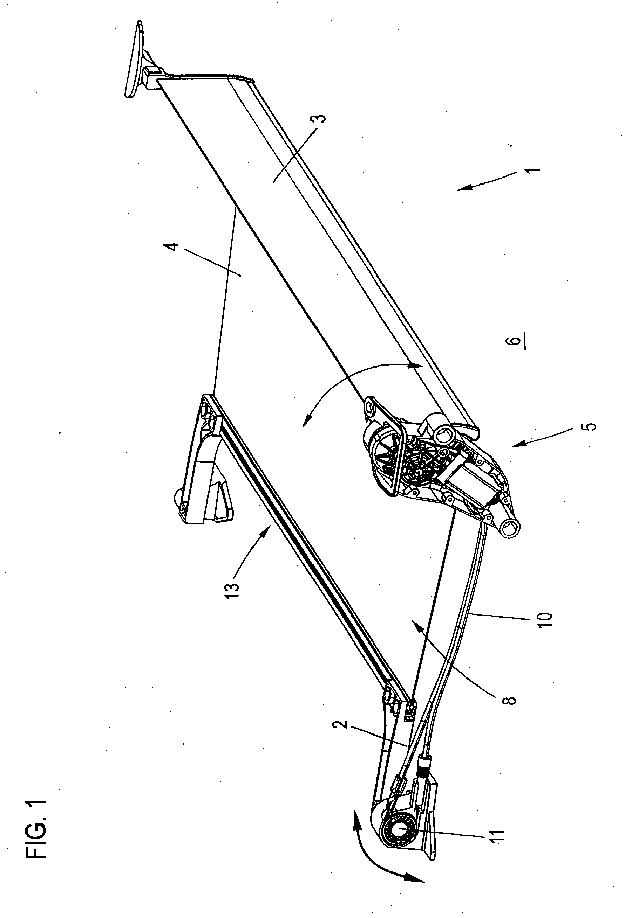

- Fig. 1 - 4: jeweils eine Prinzipdarstellung einer Vorrichtung gemäß einem Ausführungsbeispiel der Erfindung.

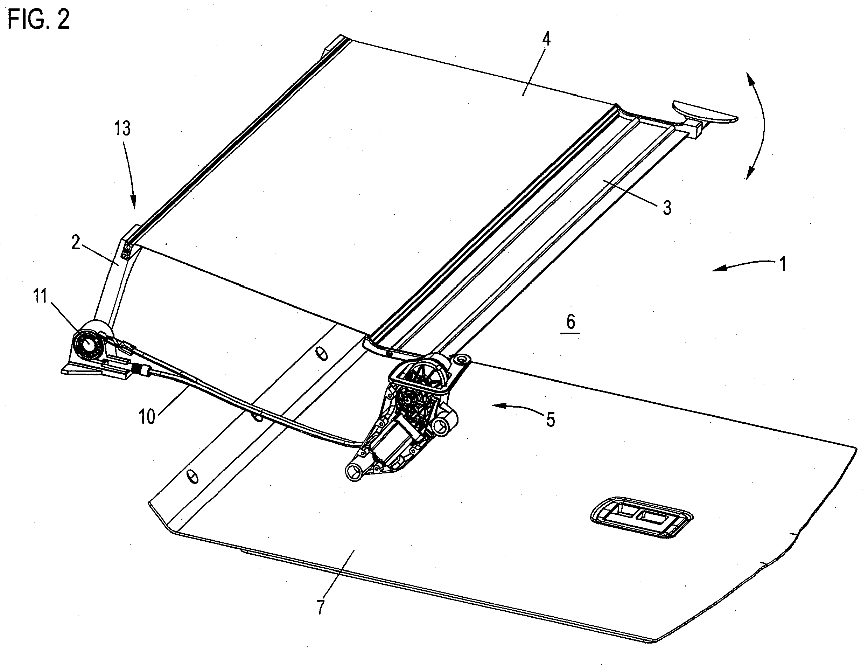

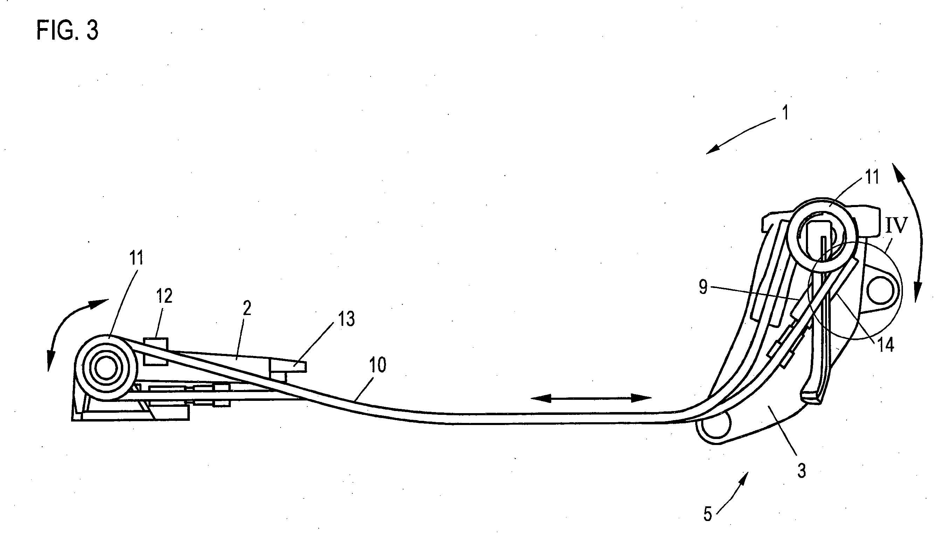

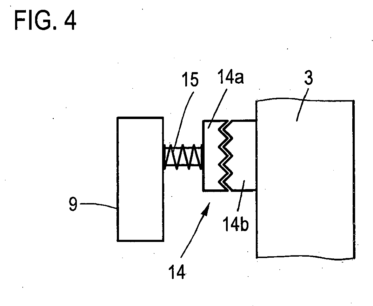

Die Fig. 1 - 4 zeigen jeweils eine Prinzipdarstellung einer Vorrichtung 1 gemäß einem Ausführungsbeispiel der Erfindung: Fig. 1, 2 zeigen perspektivische Ansichten der Vorrichtung 1 mit entsprechenden dieser zugehörigen Schwenkteilen 2, 3 in unterschiedlichen Schwenkstellungen, Fig. 3 zeigt eine Seitenansicht der Vorrichtung 1. Fig. 4 zeigt eine vergrößerte Darstellung der in Fig. 3 gezeigten Einzelheit IV.

Die Vorrichtung 1 dient zur Aufnahme eines Verdecks (nicht gezeigt) eines Kraftfahrzeugs (nicht gezeigt) in Cabriolet-Bauform. Die Vorrichtung 1 umfasst als wesentliche Bestandteile ein bügelartiges erstes Schwenkteil 2, ein blendenartiges zweites Schwenkteil 3, ein an den Schwenkteilen 2, 3 befestigbares bzw. befestigtes Bodenteil 4 sowie eine Antriebseinrichtung 5.

Die Schwenkteile 2, 3 sind, wie durch die Doppelpfeile angedeutet, jeweils um eine quer zur Längsrichtung des Kraftfahrzeugs erstreckende Schwenkachse in bzw. zwischen zwei Schwenkstellungen relativ zu der Fahrzeugkarosserie verschwenkbar.

Das erste Schwenkteil 2 ist an einem einen hinteren Gepäckraum 6, von welchem in Fig. 2 nur der Gepäckraumboden 7 dargestellt ist, von einer Fahrgastzelle trennenden Fahrzeugkarosserieteil (nicht gezeigt), typischerweise einer einen hinteren Gepäckraum 6 von einer Fahrgastzelle trennenden Rückwand, gelagert. Das zweite Schwenkteil 3 ist an einem zwischen dem den Gepäckraum 6 von der Fahrgastzelle trennenden Fahrzeugkarosserieteil und dem Heck der Fahrzeugkarosserie angeordneten oder ausgebildeten weiteren Fahrzeugkarosserieteil (nicht gezeigt) gelagert.

Wie erwähnt und anhand der Fig. 1, 2 ersichtlich, sind die Schwenkteile 2, 3 jeweils zwischen zwei Schwenkstellungen verschwenkbar. Jedes Schwenkteil 2, 3 lässt sich sonach in zwei ausgezeichnete Schwenkstellungen verschwenken. In einer jeweiligen ersten Schwenkstellung des ersten und zweiten Schwenkteils 2, 3 ist ein einen Teil des oder eines hinteren Gepäckraums 6 einnehmender, insbesondere wannenförmiger, Aufnahmeraum 8 zur Aufnahme des Verdecks des Kraftfahrzeugs ausbildbar oder ausgebildet (vgl. Fig. 1). In der jeweiligen ersten Schwenkstellung der Schwenkteile 2, 3 ist das Verdeck typischerweise geöffnet. Entsprechend ist in einer jeweiligen zweiten Schwenkstellung des ersten und zweiten Schwenkteils 2, 3 kein solcher Aufnahmeraum 8 zur Aufnahme eines Verdecks des Kraftfahrzeugs ausbildbar oder ausgebildet (vgl. Fig. 2). In der jeweiligen zweiten Schwenkstellung der Schwenkteile 2, 3 ist das Verdeck typischerweise geschlossen.

Der zur Lagerung von Gegenständen verfügbare hintere Gepäckraum 6 ist in der jeweiligen ersten Schwenkstellung der beiden Schwenkteile 2, 3 (vgl. Fig. 1) sonach kleiner als in der jeweiligen zweiten Schwenkstellung der Schwenkteile 2, 3 (vgl. Fig. 2). Anhand der Fig. 1, 2 ist zudem ersichtlich, dass die Schwenkteile 2, 3 in ihren jeweiligen ersten und zweiten Schwenkstellungen unterschiedlich zueinander ausgerichtet sind.

Die Verschwenkung der Schwenkteile 2, 3 erfolgt über die Antriebseinrichtung 5, welche als wesentliche Funktionskomponenten einen Antrieb 9, hier in Form eines elektrischen Motors, und ein Antriebsmittel 10, hier in Form eines Antriebsseils, umfasst (vgl. Fig. 3). Ersichtlich ist der Antrieb 9 unmittelbar an dem zweiten Schwenkteil 3 angeordnet (vgl. Fig. 3).

Die Schwenkteile 2, 3 sind über die Antriebseinrichtung 5, d. h. die das dieser zugehörige Antriebsmittel 10, miteinander verbunden und bewegungsgekoppelt. Die Bewegungskopplung der Schwenkteile 2, 3 bedeutet, dass über die Antriebseinrichtung 5 induzierte Schwenkbewegungen des ersten Schwenkteils 2 richtungsmäßig entgegen gesetzte Schwenkbewegungen des zweiten Schwenkteils 3, oder umgekehrt, bedingen.

Wie insbesondere in Fig. 3 ersichtlich, umfassen die Schwenkteile 2, 3 jeweils außenseitig an diesen drehfest angeordnete Antriebselemente 11, hier in Form von Umlenkrollen. Die Antriebselemente 11 sind von dem Antriebsmittel 10 abschnittsweise außenumfangsseitig umschlungen - mit anderen Worten wird das Antriebsmittel 10 außenumfangsseitig um die Antriebselemente 11 umlaufend herum geführt - woraus sich die beschriebene Verbindung und Bewegungskopplung der Schwenkteile 2, 3 ergibt.

Der Antrieb 9 ist unmittelbar an dem zweiten Schwenkteil 3 angeordnet und unmittelbar mit dem zweiten Schwenkteil 3 gekoppelt derart, dass über diesen eine Schwenkbewegung in das unmittelbar mit dem Antrieb 9 gekoppelte zweite Schwenkteil 3 einbringbar ist, wobei eine in das unmittelbar mit dem Antrieb 9 gekoppelte zweite Schwenkteil 3 eingebrachte Schwenkbewegung eine, insbesondere richtungsmäßig entgegen gesetzte, Schwenkbewegung des nicht unmittelbar mit dem Antrieb 9 gekoppelten ersten Schwenkteils 2 bedingt.

Zwischen dem Antrieb 9 und dem zweiten Schwenkteil 3 ist eine Kupplungseinrichtung 14, z. B. in Form einer Lamellen-, Reib- oder Rutschkupplung, angeordnet, über welche sich die Kopplung zwischen dem Antrieb 9 und dem zweiten Schwenkteil 3 bedarfs- bzw. zeitweise lösen lässt (vgl. Fig. 4). Über die Kupplungseinrichtung 14 lässt sich im Allgemeinen eine kraft- und/oder formschlüssige, gleichwohl lösbare Kopplung zwischen dem Antrieb 9 und dem zweiten Schwenkteil 3 ausbilden.

Die Kupplungseinrichtung 14 ist derart eingerichtet, dass sie die Kopplung des Antriebs 9 mit dem zweiten Schwenkteil 3 bei Überschreiten einer bestimmten bzw. kupplungseinrichtungsspezifischen Last löst und bei Unterschreiten der bestimmten bzw. kupplungseinrichtungsspezifischen Last wieder ausbildet. Dies ist vermittels eines oder mehrerer vorgespannter Federelemente 15, welche ein der Kupplungseinrichtung 14 zugehöriges antriebsseitiges Kupplungselement 14a gegen ein der Kupplungseinrichtung 14 zugehöriges schwenkteilseitiges Kupplungselement 14b verspannen, realisiert sein. Durch das "automatische" Lösen der Kopplung bei Überschreiten der bestimmten bzw. kupplungseinrichtungsspezifischen Last, können Beschädigungen der Vorrichtung 1, d. h. insbesondere der beiden Schwenkteile 2, 3 oder der Antriebseinrichtung 5, infolge von äußeren Lastsituationen, z. B. bei unsachgemäßer Bedienung der Vorrichtung, verhindert werden.

Die über die Antriebseinrichtung 5 gegebene Verbindung und Bewegungskopplung zwischen den beiden Schwenkteilen 2, 3 ist in allen Fällen weiterhin gewährleistet.

In einer alternativen Ausführung können Schwenkbewegungen mittelbar über das mit dem Antrieb 9 und dem ersten und/oder zweiten Schwenkteil 2, 3 gekoppelte Antriebsmittel 10 in das erste und/oder zweite Schwenkteil 2, 3 eingebracht werden. Auf das Antriebsmittel 10 lässt sich über den Antrieb 9 eine Antriebsenergie, typischerweise ein Antriebsmoment, und von dem Antriebsmittel 10 weiter auf die Schwenkteile 2, 3 übertragen, so dass diese in entsprechende Schwenkbewegungen versetzt werden. Selbstverständlich ist es möglich, das Antriebsmittel 10 über den Antrieb 9 sowohl im Uhrzeigersinn als auch entgegen dem Uhrzeigersinn anzutreiben, was durch den Doppelpfeil in Fig. 3 angedeutet ist. Es ist also möglich, dass der Antrieb 9 unmittelbar mit dem Antriebsmittel 10 gekoppelt ist derart, dass über einen Antrieb des Antriebsmittels 10, insbesondere richtungsmäßig entgegen gesetzte, Schwenkbewegungen in das erste und das zweite Schwenkteil 2, 3 einbringbar sind.

Selbstverständlich ist es möglich, einen wie beschrieben über die Antriebseinrichtung 5 realisierten Schwenkantrieb der Schwenkteile 2, 3 beiderseits, d. h. sowohl links als auch rechts der Längsmittelachse des Kraftfahrzeugs vorzusehen.

Im Zusammenhang mit den schwenkteilseitigen Antriebselementen 11 ist zu erwähnen, dass diese unterschiedliche Abmessungen, insbesondere Außenumfänge, aufweisen können. Derart, d. h. insbesondere über unterschiedliche Außenumfänge, der Umlenkelemente, ist es möglich, gezielt Schwenkbewegungen der beiden Schwenkteile 2, 3 mit unterschiedlichen Winkelgeschwindigkeiten im Sinne einer Über- oder Untersetzung zu realisieren. Es können sonach unterschiedliche Winkel zum Erreichen bestimmter Schwenkstellungen überstrichen werden.

Die Vorrichtung 1 umfasst ferner eine Spanneinrichtung 12, welche zum Spannen des Antriebsmittels 10 eingerichtet ist. Über die Spanneinrichtung 12, hier in Form einer mit dem Antriebsmittel 10 zusammenwirkenden Feder, können sonach z. B. fertigungsbedingte und/oder betriebsbedingte, insbesondere temperaturbedingte, Längentoleranzen des Antriebsmittels 10 ausgeglichen werden. Gleichermaßen kann das Antriebsmittel 10 stets unter einer bestimmten Vorspannung gehalten werden. Derart ist insbesondere auch die Ausbildung einer von Fahrzeuginsassen gegebenenfalls als störend empfundenen Geräuschkulisse, z. B. durch Klappergeräusche, unterbunden.

Im Zusammenhang mit dem Bodenteil 4 ist noch zu erwähnen, dass dieses über eine Rollo-Einrichtung 13 an dem ersten Schwenkteil 2 befestigt sein kann. Vorstellbar ist auch eine direkte Anbindung an dem ersten Schwenkteil 2, wenn es keine Abstands- bzw. Längendifferenz in den jeweiligen Endstellungen gibt. Dies hängt von jeweils kraftfahrzeugseitig gegebenen konstruktiven Rahmenbedingungen, d. h. z. B. dem Gepäck- bzw. Kofferraumvolumen, ab, ist technisch jedoch jedenfalls möglich.

Über die Rollo-Einrichtung 13 ist sichergestellt, dass das aus einem flexiblen bzw. textilartigen Bodenteilelement oder mehreren miteinander verbundenen flexiblen bzw. textilartigen Bodenteilelementen gebildete Bodenteil 4 stets unter einer gewissen Zugspannung gehalten bzw. gestrafft ist. Derart können Abstands- bzw. Längendifferenzen zwischen dem ersten und dem zweiten Schwenkteil 2, 3 in den jeweiligen Schwenkstellungen ausgeglichen werden.

## Patentansprüche

1. Vorrichtung (1) zur Aufnahme eines Verdecks eines Kraftfahrzeugs in Cabriolet-Bauform, umfassend:
- ein zwischen zwei Schwenkstellungen verschwenkbar an einer Fahrzeugkarosserie zu lagerndes oder gelagertes erstes Schwenkteil (2),
- ein zwischen zwei Schwenkstellungen verschwenkbar an einer Fahrzeugkarosserie zu lagerndes oder gelagertes zweites Schwenkteil (3),
- ein sowohl an dem ersten Schwenkteil (2) als auch an dem zweiten Schwenkteil (3) befestigbares oder befestigtes Bodenteil (4),
- wenigstens eine Antriebseinrichtung (5), über welche die beiden Schwenkteile (2, 3) verbunden und derart bewegungsgekoppelt sind, dass über die Antriebseinrichtung (5) induzierte Schwenkbewegungen des ersten Schwenkteils (2), insbesondere richtungsmäßig entgegen gesetzte, Schwenkbewegungen des zweiten Schwenkteils (3), oder umgekehrt, bedingen, wobei zwischen dem oder einem der Antriebseinrichtung (5) zugehörigen Antrieb (9) und dem ersten oder zweiten Schwenkteil (2, 3) eine Kupplungseinrichtung (14) angeordnet ist,
**dadurch gekennzeichnet,**
**dass** die Kupplungseinrichtung die Kopplung des Antriebs mit dem ersten oder zweiten Schwenkteil bei Überschreiten einer bestimmten kupplungseinrichtungsspezifischen Last löst und bei Unterschreiten der bestimmten kupplungseinrichtungsspezifischen Last wieder herstellt.

2. Vorrichtung nach Anspruch 1,
**dadurch gekennzeichnet,**
**dass** die Antriebseinrichtung (5) wenigstens ein Antriebsmittel (10) umfasst, über welches die beiden Schwenkteile (2, 3) verbunden und derart bewegungsgekoppelt sind, dass über die Antriebseinrichtung (5) induzierte Schwenkbewegungen des ersten Schwenkteils (2), insbesondere richtungsmäßig entgegen gesetzte, Schwenkbewegungen des zweiten Schwenkteils (3), oder umgekehrt, bedingen.

3. Vorrichtung nach Anspruch 2,
**dadurch gekennzeichnet,**
**dass** das Antriebsmittel (10) drehfest an den jeweiligen Schwenkteilen (2, 3) angeordnete oder ausgebildete Antriebselemente (11) abschnittsweise umschlingt.

4. Vorrichtung nach Anspruch 3,
**dadurch gekennzeichnet,**
**dass** jeweilige schwenkteilseitige Antriebselemente (11) als, insbesondere rollenartige, Umlenkelemente ausgebildet sind.

5. Vorrichtung nach Anspruch 4,
**dadurch gekennzeichnet,**
**dass** die jeweiligen Umlenkelemente gleiche oder unterschiedliche Abmessungen, insbesondere Außenumfänge, aufweisen.

6. Vorrichtung nach einem der Ansprüche 2 bis 5,
**dadurch gekennzeichnet,**
**dass** das Antriebsmittel (10) als ein Antriebsriemen, eine Antriebskette oder ein Antriebsseil ausgebildet ist.

7. Vorrichtung nach einem der Ansprüche 2 bis 6,
**gekennzeichnet durch**
eine Spanneinrichtung (11), welche zum Spannen des Antriebsmittels (10) eingerichtet ist.

8. Vorrichtung nach einem der vorangehenden Ansprüche,
**dadurch gekennzeichnet,**
**dass** ein der Antriebseinrichtung (5) zugehöriger Antrieb (9) unmittelbar an oder in dem ersten oder zweiten Schwenkteil (2, 3) angeordnet oder ausgebildet ist.

9. Vorrichtung nach Anspruch 8,
**dadurch gekennzeichnet,**
**dass** der Antrieb (9) unmittelbar mit dem ersten oder zweiten Schwenkteil (2, 3) gekoppelt ist derart, dass über diesen eine Schwenkbewegung in das unmittelbar mit dem Antrieb (9) gekoppelte erste oder zweite Schwenkteil (2, 3) einbringbar ist, wobei eine in das unmittelbar mit dem Antrieb (9) gekoppelte erste oder zweite Schwenkteil (2, 3) eingebrachte Schwenkbewegung eine, insbesondere richtungsmäßig entgegen gesetzte, Schwenkbewegung des nicht unmittelbar mit dem Antrieb (9) gekoppelten ersten oder zweiten Schwenkteils (3), oder umgekehrt, bedingt.

10. Vorrichtung nach Anspruch 8 und einem der Ansprüche 2 bis 7,
**dadurch gekennzeichnet,**
**dass** der Antrieb (9) unmittelbar mit dem Antriebsmittel (10) gekoppelt ist derart, dass über einen Antrieb des Antriebsmittels (10), insbesondere richtungsmäßig entgegen gesetzte, Schwenkbewegungen in das erste und das zweite Schwenkteil (2, 3) einbringbar sind.

11. Vorrichtung nach einem der vorangehenden Ansprüche,
**dadurch gekennzeichnet,**
**dass** das erste Schwenkteil (2) im in einem Kraftfahrzeug verbauten Zustand der Vorrichtung (1) an einem einen hinteren Gepäckraum (6) von einer Fahrgastzelle trennenden Fahrzeugkarosserieteil, insbesondere einer einen hinteren Gepäckraum (6) von einer Fahrgastzelle trennenden Rückwand, gelagert ist und das zweite Schwenkteil (3) im in einem Kraftfahrzeug verbauten Zustand der Vorrichtung (1) an einem zwischen dem den Gepäckraum (6) von der Fahrgastzelle trennenden Fahrzeugkarosserieteil und dem Heck der Fahrzeugkarosserie angeordneten oder ausgebildeten weiteren Fahrzeugkarosserieteil gelagert ist.

12. Vorrichtung nach einem der vorangehenden Ansprüche,
**dadurch gekennzeichnet,**
**dass** im in einem Kraftfahrzeug verbauten Zustand der Vorrichtung (1) in einer jeweiligen ersten Schwenkstellung des ersten und zweiten Schwenkteils (2, 3) ein einen Teil des oder eines hinteren Gepäckraums (6) einnehmender, insbesondere wannenförmiger, Aufnahmeraum (8) zur Aufnahme eines Verdecks des Kraftfahrzeugs ausbildbar oder ausgebildet ist und in einer jeweiligen zweiten Schwenkstellung des ersten und zweiten Schwenkteils (2, 3) kein Aufnahmeraum (8) zur Aufnahme eines Verdecks des Kraftfahrzeugs ausbildbar oder ausgebildet ist.

13. Vorrichtung nach einem der vorangehenden Ansprüche,
**dadurch gekennzeichnet,**
**dass** das Bodenteil (4) zumindest teilweise aus einem flexiblen Bodenteilelement oder mehreren miteinander verbundenen, zumindest teilweise flexiblen Bodenteilelementen gebildet ist.

14. Kraftfahrzeug in Cabriolet-Bauform, umfassend ein Verdeck und eine Vorrichtung (1) nach einem der vorangehenden Ansprüche.

## Claims

1. Device (1) for receiving a cover of a convertible motor vehicle, comprising:
- a first pivot part (2), supported or to be supported pivotably on a vehicle body between two pivot positions,
- a second pivot part (3), supported or to be supported pivotably on a vehicle body between two pivot positions,
- a floor part (4) fastenable or fastened both on the first pivot part (2) and on the second pivot part (3),
- at least one drive device (5), by way of which the two pivot parts (2, 3) are connected and movement-coupled, such that pivot movements of the first pivot part (2) induced by way of the drive device (5) cause pivot movements of the second pivot part (3), in particular in opposite direction, or vice versa, wherein a coupling device (14) is arranged between the or a drive (9) associated with the drive device (5) and the first or second pivot part (2, 3),
**characterised in that**
the coupling device releases the coupling of the drive with the first or second pivot part, if a certain load specific to the coupling device is exceeded, and reestablishes it, if the load falls below the certain load specific to the coupling device.

2. Device according to claim 1,
**characterised in that**
the drive device (5) comprises at least one drive means (10), by way of which the two pivot parts (2, 3) are connected and movement-coupled, such that pivot movements of the first pivot part (2) induced by way of the drive device (5) cause pivot movements of the second pivot part (3), in particular in opposite direction, or vice versa.

3. Device according to claim 2,
**characterised in that**
the drive means (10) clasps sectionally drive elements (11) arranged or formed in a rotationally fixed manner on the respective pivot parts (2, 3).

4. Device according to claim 3,
**characterised in that**
respective drive elements (11) on a pivot part side are formed as, in particular roll-type, deflection elements.

5. Device according to claim 4,
**characterised in that**
the respective deflection elements have same or different dimensions, in particular outer circumferences.

6. Device according to any one of claims 2 to 5,
**characterised in that**
the drive means (10) is formed as a drive belt, a drive chain or a drive cable.

7. Device according to any one of claims 2 to 6,
**characterised by**
a tensioning device (11), which is configured to tension the drive means (10).

8. Device according to any one of the preceding claims,
**characterised in that**
a drive (9) associated with the drive device (5) is arranged or formed directly on or in the first or second pivot part (2, 3).

9. Device according to claim 8,
**characterised in that**
the drive (9) is coupled directly with the first or second pivot part (2, 3), such that by way of this a pivot movement can be introduced into the first or second pivot part (2, 3) coupled directly with the drive (9), wherein a pivot movement introduced into the first or second pivot part (2, 3) coupled directly with the drive (9) causes a pivot movement, in particular in opposite direction, of the first or second pivot part (3) not directly coupled with the drive (9), or vice versa.

10. Device according to claim 8 and any one of claims 2 to 7,
**characterised in that**
the drive (9) is coupled directly with the drive means (10), such that pivot movements, in particular in opposite directions, can be introduced into the first and the second pivot part (2, 3) by way of a drive of the drive means (10).

11. Device according to any one of the preceding claims,
**characterised in that**
the first pivot part (2), in a mounted state of the device (1) in a motor vehicle, is supported on a vehicle body part separating a rear luggage compartment (6) from a passenger compartment, in particular a rear wall separating a rear luggage compartment (6) from a passenger compartment, and the second pivot part (3), in a mounted state of the device (1) in a motor vehicle, is supported on a further vehicle body part which is arranged or formed between the vehicle body part separating the luggage compartment (6) from the passenger compartment and the rear of the vehicle body.

12. Device according to any one of the preceding claims,
**characterised in that**,
in the mounted state of the device (1) in a motor vehicle, in a respective first pivot position of the first and second pivot part (2, 3) an, in particular trough-shaped, receiving space (8), occupying a portion of the or a rear luggage compartment (6), is formable or formed for receiving a cover of the motor vehicle and in a respective second pivot position of the first and second pivot part (2, 3) no receiving space (8) is formable or formed for receiving a cover of the motor vehicle.

13. Device according to any one of the preceding claims,
**characterised in that**
the floor part (4) is formed at least in part of a flexible floor part element or multiple interconnected, at least partially flexible floor part elements.

14. Convertible motor vehicle, comprising a cover and a device (1) according to any one of the preceding claims.

## Revendications

1. Dispositif (1) de réception d'une capote d'un véhicule automobile de type cabriolet, comprenant :
- une première partie pivotante (2) logée ou à loger de manière pivotante entre deux positions de pivotement au niveau d'une carrosserie de véhicule,
- une deuxième partie pivotante (3) logée ou à loger de manière pivotante entre deux positions de pivotement au niveau d'une carrosserie de véhicule,
- une partie de base (4) fixée ou fixable aussi bien au niveau de la première partie pivotante (2) qu'au niveau de la deuxième partie pivotante (3),
- au moins un dispositif de propulsion (5), par le biais duquel les deux parties pivotantes (2, 3) sont reliées et couplées en mouvement de sorte que des mouvements de pivotement de la première partie pivotante (2) induits par le biais du dispositif de propulsion (5) conditionnent des mouvements de pivotement, en particulier en sens opposé, de la deuxième partie pivotante (3), ou inversement, dans lequel un dispositif de liaison (14) est agencé entre le ou un entraînement (9) associé au dispositif de propulsion (5) et la première ou deuxième partie pivotante (2, 3),
**caractérisé en ce**
**que** le dispositif de liaison libère le couplage de l'entraînement avec la première ou deuxième partie pivotante en cas de dépassement d'une charge déterminée propre au dispositif de liaison et le rétablit en cas de sous-dépassement de la charge déterminée propre au dispositif de liaison.

2. Dispositif selon la revendication 1,
**caractérisé en ce**
**que** le dispositif de propulsion (5) comprend au moins un moyen d'entraînement (10), par le biais duquel les deux parties pivotantes (2, 3) sont reliées et couplées en mouvement de sorte que des mouvements de pivotement de la première partie pivotante (2) induits par le biais du dispositif de propulsion (5) conditionnent des mouvements de pivotement, en particulier en sens opposé, de la deuxième partie pivotante (3), ou inversement.

3. Dispositif selon la revendication 2,
**caractérisé en ce**
**que** le moyen d'entraînement (10) s'enroule par section autour d'éléments d'entraînement (11) réalisés ou agencés solidaires en rotation au niveau des parties de pivotement (2, 3) respectives.

4. Dispositif selon la revendication 3,
**caractérisé en ce**
**que** des éléments d'entraînement côté partie de pivotement (11) respectifs sont réalisés en tant qu'éléments de renvoi, en particulier de type poulie.

5. Dispositif selon la revendication 4,
**caractérisé en ce**
**que** les éléments de renvoi respectifs présentent des dimensions, en particuliers des circonférences extérieures, identiques ou différentes.

6. Dispositif selon l'une quelconque des revendications 2 à 5,
**caractérisé en ce**
**que** le moyen d'entraînement (10) est réalisé en tant que courroie d'entraînement, chaîne d'entraînement ou câble d'entraînement.

7. Dispositif selon l'une quelconque des revendications 2 à 6,
**caractérisé par**
un dispositif de serrage (11), lequel est aménagé pour le serrage du moyen d'entraînement (10).

8. Dispositif selon l'une quelconque des revendications précédentes,
**caractérisé en ce**
**qu'**un entraînement (9) associé au dispositif de propulsion (5) est agencé ou réalisé directement au niveau de ou dans la première ou deuxième partie pivotante (2, 3).

9. Dispositif selon la revendication 8,
**caractérisé en ce**
**que** l'entraînement (9) est couplé directement à la première ou deuxième partie pivotante (2, 3) de sorte qu'un mouvement de pivotement peut être introduit par son biais dans la première ou deuxième partie pivotante (2, 3) couplée directement avec l'entraînement (9), dans lequel un mouvement de pivotement introduit dans la première ou deuxième partie pivotante (2, 3) couplée directement avec l'entraînement (9) conditionne un mouvement de pivotement, en particulier en sens opposé, de la première ou deuxième partie pivotante (3) couplée non directement avec l'entraînement (9), ou inversement.

10. Dispositif selon la revendication 8 et l'une quelconque des revendications 2 à 7,
**caractérisé en ce**
**que** l'entraînement (9) est couplé directement au moyen d'entraînement (10) de sorte que des mouvements de pivotement, en particulier en sens opposé, peuvent être introduits dans la première ou deuxième partie pivotante (2, 3) par le biais d'un entraînement du moyen d'entraînement (10).

11. Dispositif selon l'une quelconque des revendications précédentes,
**caractérisé en ce**
**que** la première partie pivotante (2) est logée à l'état monté dans un véhicule automobile du dispositif (1) au niveau d'une partie de carrosserie de véhicule séparant un coffre arrière (6) d'un habitacle, en particulier d'une paroi arrière séparant un coffre arrière (6) d'un habitacle, et la deuxième partie pivotante (3) est logée à l'état monté dans un véhicule automobile du dispositif (1) au niveau d'une autre partie de carrosserie de véhicule réalisée ou agencée entre la partie de carrosserie de véhicule séparant le coffre arrière (6) de l'habitacle et l'arrière de la carrosserie de véhicule.

12. Dispositif selon l'une quelconque des revendications précédentes,
**caractérisé en ce**
**qu'**à l'état monté dans un véhicule automobile du dispositif (1) dans une première position de pivotement respective de la première et deuxième partie pivotante (2, 3), un espace de réception (8), en particulier en forme de cuve, occupant une partie du ou d'un coffre arrière (6) est réalisable ou réalisé pour la réception d'une capote du véhicule automobile et dans une deuxième position de pivotement respective de la première et deuxième partie pivotante (2, 3), aucun espace de réception (8) n'est réalisable ou réalisé pour la réception d'une capote du véhicule automobile.

13. Dispositif selon l'une quelconque des revendications précédentes,
**caractérisé en ce**
**que** la partie de base (4) est formée au moins en partie d'un élément de partie de base flexible ou de plusieurs éléments de partie de base flexibles au moins en partie, reliés l'un à l'autre.

14. Véhicule automobile de type cabriolet, comprenant une capote et un dispositif (1) selon l'une quelconque des revendications précédentes.
